# EUROPÄISCHE PATENTSCHRIFT

(11) **EP 3 818 797 B1**
(45) Veröffentlichungstag und Bekanntmachung des Hinweises auf die Patenterteilung: **28.06.2023**
(21) Anmeldenummer: 20204013.5
(22) Anmeldetag: 27.10.2020
(51) Int. Cl.: A01B 59/06, A01B 69/00, A01D 67/00, A01B 73/04, A01D 75/20

(54) **LANDWIRTSCHAFTLICHES ARBEITSGERÄT UND -GERÄTEKOMBINATION**
AGRICULTURAL IMPLEMENT AND DEVICE COMBINATION
COMBINAISON D'APPAREIL DE TRAVAIL AGRICOLE ET APPAREIL

(30) Priorität: 06.11.2019 DE 102019129937
(43) Veröffentlichungstag der Anmeldung: 12.05.2021
(73) Patentinhaber: PÖTTINGER Landtechnik GmbH, 4710 Grieskirchen (AT)
(72) Erfinder: PRECHTL, Christoph, 4710 Grieskirchen (AT); KREUPL, Walter, 4710 Grieskirchen (AT); EDELBAUER, Roland, 4710 Grieskirchen (AT); LEHNER, Josef, 4710 Grieskirchen (AT); RUTTINGER, Peter, 4710 Grieskirchen (AT); REININGER, Markus, 4710 Grieskirchen (AT); LINDINGER, Christian, 4710 Grieskirchen (AT)
(74) Vertreter: Thoma, Michael

(56) Entgegenhaltungen:
- EP-A1- 3 259 970
- DE-A1-102015 014 274

## Beschreibung

Die vorliegende Erfindung betrifft ein landwirtschaftliches Arbeitsgerät umfassend eine Funktionsbaugruppe, insbesondere in Form eines Sensorbalkens zum sensorischen Abtasten einer Fahrgasse, und einen Geräteträger, an dem die genannte Funktionsbaugruppe angeordnet ist, wobei der Geräteträger Verbindungsmittel zum Verbinden des Arbeitsgeräts mit einer landwirtschaftlichen Anbaumaschine, die zum Anbau an einen Schlepper vorgesehen ist, aufweist. Die Erfindung betrifft ferner auch eine landwirtschaftliche Arbeitsgerätekombination umfassend eine solche Anbaumaschine und ein damit verbundenes Arbeitsgerät der genannten Art, sowie ferner ein landwirtschaftliches Gespann umfassend einen Schlepper, eine daran angebaute Anbaumaschine sowie ein damit verbundenes Arbeitsgerät.

Landwirtschaftliche Anbaumaschinen wie beispielsweise Mähmaschinen, Heuwerbungsmaschinen oder andere Grünlandbearbeitungsmaschinen, oder beispielsweise Bodenbearbeitungsmaschinen wie Eggen, Grubber und Pflüge werden bisweilen mit zusätzlichen landwirtschaftlichen Arbeitsgeräten betrieben bzw. verwendet, die eine zusätzliche Funktionsbaugruppe besitzen, welche die Arbeitsfunktion des Arbeitsaggregats der Anbaumaschine unterstützen kann oder allgemein eine zusätzliche landwirtschaftliche Funktion bereitstellt. Eine solche zusätzliche Funktionsbaugruppe kann beispielsweise ein Sensorbalken sein, der eine Sensoreinrichtung zum Abtasten einer Fahrgasse aufweist, beispielsweise um in der Fahrgasse befindliche Tiere wie Rehkitze oder Hindernisse wie Steine zu erfassen oder auch bestimmte Ernteguteigenschaften wie beispielsweise das Volumen eines am Boden liegenden Schwads oder die Lage einer Bestandskante beispielsweise in Form einer noch nicht umgemähten Bewuchsgrenze oder des Übergangs zwischen gepflügtem und ungepflügtem Bereich zu ermitteln. In Abhängigkeit der sensorischen Abtastung der Fahrgasse können dem Schlepperführer Informationen angezeigt oder Steuerungsfunktionen der Anbaumaschine ausgeführt bzw. angepasst werden, wobei beispielsweise im Falle einer Tiererfassungssensorik bei Erfassen eines Kitzes ein Warnsignal abgegeben und/oder das Arbeitsaggregat der Anbaumaschine angehoben und/oder gestoppt werden kann. Wird das Schwadvolumen erfasst, kann beispielsweise eine Pickup-Drehzahl beschleunigt oder verlangsamt oder für die Schlepperfahrgeschwindigkeit ein Geschwindigkeits-Sollsignal abgegeben werden. Wird eine Bestandskante erfasst, kann ein Lenksignal zum Entlangfahren an der Kante bereitgestellt oder auch ein Arbeitsaggregat angehoben oder abgesenkt werden.

Eine solche zusätzliche Funktionsbaugruppe kann aber auch ein Sprühbalken zum Besprühen des Ernteguts mit einem Additiv oder Ausbringen von Dünger auf den zu pflügenden bzw. zu bearbeitenden Boden sein, oder auch einen Spuranreißer umfassen, der die Fahrspur einer nächsten Fahrgasse anreißt. Andere Funktionsbaugruppen können ebenfalls an dem Geräteträger des Arbeitsgeräts angebracht sein.

Die Funktionsbaugruppe kann dabei in der aktuellen Fahrgasse, die vom Arbeitsaggregat der zugeordneten Anbaumaschine gerade bearbeitet wird, angeordnet sein und der Arbeitsmaschine voraus- oder nachlaufen. Alternativ oder zusätzlich ist es aber auch möglich, die genannte Funktionsbaugruppe in einer vorausgegangenen oder zukünftigen Fahrgasse anzuordnen, die von der zugehörigen Anbaumaschine zuvor oder in der nächsten oder einer späteren Schleife bearbeitet wird.

Die EP 32 59 970 A1 zeigt beispielsweise einen als Zwischenrahmen ausgebildeten Geräteträger mit einer daran angeordneten Funktionsbaugruppe in Form einer Sonde zum Erkennen von seitlich der Fahrgasse angeordneten Weinreben, wobei der Zwischenrahmen Schlepperkupplungsmittel zum Ankuppeln an den Schlepper und Maschinenkupplungsmittel zum Ankuppeln einer Anbaumaschine aufweist. Einen ähnlichen Zwischenrahmen zeigt die Schrift DE 10 2015 014 274 A1, wobei der genannte Zwischenrahmen als Funktionsbaugruppe seitlich aufkragende Messerbalken trägt.

Das Arbeitsgerät mit der zusätzlichen Funktionsbaugruppe wird dabei häufig am Bug des Schleppers angeordnet, beispielsweise an einer frontseitig am Schlepper angebauten Arbeitsmaschine befestigt, kann aber auch heckseitig am Schlepper angeordnet werden oder seitlich am Schlepper befestigt werden. Beispielsweise zeigt die Schrift DE 10 258 347 A1 einen Sensorbalken, der am Fronthubwerk des Schleppers angebaut werden kann, während das eigentliche Arbeitsgerät bzw. die Anbaumaschine in Form einer Bodenbearbeitungsmaschine heckseitig am Schlepper angebaut wird.

Die Schrift CH 677 308 A5 zeigt einen Sensorbalken mit mehreren Infrarotdetektoren zum Erkennen von Wild, der seitlich am Schlepper an dessen Karosserie bzw. Kotflügel-Blechwerk montiert werden kann, um seitlich vom Schlepper auszukragen.

Ein weiterer Sensorbalken zum Erfassen von Tieren in der Fahrgasse einer Mähmaschine zeigt die Schrift EP 31 83 950 A1.

Werden solche Sensorbalken oder andere zusätzliche Funktionsbaugruppen wie beispielsweise der genannte Sprühbalken im Betrieb aus der Schlepperspur seitlich auskragend geführt, um beispielsweise die von einem heckseitig angeordneten Mähwerk befahrene Fahrgasse abzutasten oder eine in einer weiteren Fahrschleife zu befahrenden Fahrgasse abzutasten, ist es oft notwendig, den Sensorbalken bzw. die Funktionsbaugruppe an dem Geräteträger beweglich anzulenken, um den Sensorbalken bzw. die Funktionsbaugruppe aus einer abgesenkten, auskragenden Betriebsstellung in eine die Straßenbreite einhaltende Transportstellung zu verbringen oder im Vorgewende in eine leicht ausgehobene Vorgewendestellung zu verstellen. Hierzu kann der Sensorbalken bzw. die Funktionsbaugruppe an dem Geräteträger um eine liegende Schwenkachse schwenkbar aufgehängt sein, sodass der Sensorbalken bzw. die Funktionsbaugruppe aus einer abgesenkten Arbeitsstellung in eine angehobene Vorgewende- und/oder Transportstellung und zurück verschwenkt werden kann.

Um den Sensorbalken bzw. die zusätzliche Funktionsbaugruppe in ihrer Position relativ zu dem Arbeitsaggregat der zugeordneten Arbeitsmaschine möglichst exakt zu führen und/oder in unmittelbarer Nähe des Arbeitsaggregats positionieren zu können und/oder Verstellbewegungen des Arbeitsaggregats mitmachen oder ausgleichen zu können, wurde bereits vorgeschlagen, die zusätzliche Funktionsbaugruppe bzw. deren Geräteträger direkt am Arbeitsaggregat der Anbaumaschine bzw. einen Maschinenrahmen der Anbaumaschine, an dem deren Arbeitsaggregat aufgehängt ist, anzubauen, sodass beispielsweise der Sensorbalken Bewegungen des Arbeitsaggregats bzw. des Maschinenrahmens mitmachen kann. Dies hat zwar den Vorteil, dass beispielsweise beim Nachobenschwenken des Arbeitsaggregats der Anbaumaschine gleichzeitig auch der Sensorbalken bzw. die zusätzliche Funktionsbaugruppe mit nach oben geschwenkt wird und/oder die Funktionsbaugruppe Bodenanpassbewegungen des Arbeitsaggregats mitmacht.

Andererseits macht es dies schwierig, das zusätzliche Arbeitsgerät mit verschiedenen Anbaumaschinen benutzen zu können. Anbaugeräte verschiedener Hersteller haben signifikant unterschiedliche Rahmenstrukturen und Abmessungen, die jeweils ganz unterschiedliche Anbaurahmen bzw. Geräteträger erfordern, um Sensorbalken oder ähnliche zusätzliche Funktionsbauteile daran befestigen zu können. Selbst wenn die verschiedenen Anbaumaschinen vom selben Hersteller stammen, haben unterschiedliche Maschinentypen oder -modelle unterschiedliche Abmessungen und Rahmenstrukturen, die es verhindern, den Geräteträger des zusätzlichen Arbeitsgeräts daran zu befestigen.

Unabhängig von der Problematik, das Arbeitsgerät mit der Zusatzfunktion an verschiedenen Anbaumaschinen verwenden zu können, ist es wünschenswert, das Arbeitsgerät in einfacher Weise anmontieren und abmontieren bzw. in eine Nicht-Gebrauchsstellung verbringen zu können, da die zusätzliche Funktionsbaugruppe nicht immer benötigt wird. Beispielsweise wird ein Sensorbalken zur Tiererkennung regelmäßig nur bei der ersten Mahd benötigt, da beim zweiten oder dritten Schnitt bzw. beim Einbringen des Grummet später im Jahr bei deutlich kürzerem Bewuchs keine Kollision mit Kitzen mehr droht und insofern kein Sensorbalken mehr benötigt wird.

Der vorliegenden Erfindung liegt die Aufgabe zugrunde, ein verbessertes Arbeitsgerät, eine verbesserte Arbeitsgerätekombination und ein verbessertes Gespann jeweils der genannten Art zu schaffen, die Nachteile des Standes der Technik vermeiden und letzteren in vorteilhafter Weise weiterbilden. Insbesondere soll ein für verschiedene Anbaumaschinen passendes Arbeitsgerät geschaffen werden, das einfach an- und abbaubar ist, ohne die Verstellbarkeit der Anbaumaschine bzw. des Arbeitsgeräts im Vorgewende zu behindern oder die Bodenanpassung zu beeinträchtigen.

Erfindungsgemäß wird die genannte Aufgabe durch ein landwirtschaftliches Arbeitsgerät gemäß Anspruch 1, eine landwirtschaftliche Arbeitsgerätekombination gemäß Anspruch 16 sowie ein Gespann gemäß Anspruch 18 gelöst. Bevorzugte Ausgestaltungen der Erfindung sind Gegenstand der abhängigen Ansprüche.

Es wird also vorgeschlagen, den Geräteträger des Arbeitsgeräts, an dem die Funktionsbaugruppe angebracht ist, als Zwischenrahmen auszubilden und die Anbaumaschine durch den besagten Zwischenrahmen am Schlepper anzubauen. Der Zwischenrahmen wird hierzu selbst an den Anbaupunkten des Schleppers angekoppelt und spiegelt die besagten Anbaupunkte des Schleppers, um die Anbaumaschine mit deren Anbaupunkten, die an sich zum Anbau an den Schlepper vorgesehen sind, am Zwischenrahmen anbauen zu können.

Erfindungsgemäß ist der Geräteträger als Zwischenrahmen zum Einbau zwischen Schlepper und Anbaumaschine ausgebildet, wobei der genannte Zwischenrahmen einerseits Schlepperkupplungsmittel zum Ankuppeln des Zwischenrahmens an die Anbaugeräteanlenkung des Schleppers und andererseits Maschinenkupplungsmittel zum Ankuppeln der Anbaumaschine an den Zwischenrahmen aufweist.

Die Anbaumaschine kann über den Zwischenrahmen sozusagen indirekt am Schlepper angebaut werden, wobei der Schlepper die Zug- oder Schubkräfte und/oder Seitenführungs- und/oder Aushubkräfte zum Ziehen und/oder Schieben und/oder Seitenführen und/oder Ausheben der Anbaumaschine über den Zwischenrahmen auf die Anbaumaschine geben kann. Die Schlepperkupplungsmittel können den Zwischenrahmen lösbar, jedoch im angekuppelten Zustand fest bzw. starr am Schlepper halten und andererseits können die Maschinenkupplungsmittel die Anbaumaschine lösbar, jedoch im angekuppelten Zustand fest bzw. starr an dem Zwischenrahmen halten.

Durch Verwendung der üblicherweise standardisierten oder genormten Anlenkpunkte des Schleppers und der dazu kompatiblen Anlenkpunkte der Anbaumaschine für das mechanische Ankuppeln des Geräteträgers einerseits an den Schlepper und andererseits an die Anbaumaschine brauchen an der jeweiligen Anbaumaschine keinerlei Veränderungen oder Umbauten vorgenommen werden, um das zusätzliche Arbeitsgerät damit verbinden zu können. Gleichzeitig passt das Arbeitsgerät für verschiedene Anbaumaschinen, insbesondere auch für Anbaumaschinen verschiedener Hersteller, da die genannten Schlepper- und Anbaumaschinen-Anlenkpunkte üblicherweise genormt oder aufeinander abgestimmt sind, um Kompatibilitätsprobleme zwischen verschiedenen Anbaumaschinen und Schleppern zu vermeiden. Gleichzeitig ermöglicht der besagte Zwischenrahmen zwischen Schlepper und Anbaumaschine nicht nur in einfacher Weise das Ankoppeln verschiedener Anbaumaschinen, sondern auch das Betreiben der Anbaumaschine ohne das zusätzliche Arbeitsgerät. Hierzu braucht lediglich nach Abkuppeln des Zwischenrahmens vom Schlepper und von der landwirtschaftlichen Anbaumaschine die genannte Anbaumaschine direkt, das heißt ohne den Zwischenrahmen an den Schlepper angekoppelt werden.

Der als Zwischenrahmen ausgebildete Geräteträger bildet eine in einfacher Weise einbaubare mechanische Brücke zwischen Schlepper und Anbaumaschine, die nicht nur die Übertragung der üblichen Betriebskräfte zwischen Schlepper und Anbaumaschine ermöglicht, sondern auch die Funktionalitäten der Anlenkpunkte des Schleppers beibehält. In einfacher Weise kann beispielsweise das Verstellen der Anlenkpunkte am Schlepper dazu genutzt werden, um die Höhe der Anbaumaschine zu verstellen bzw. diese auszuheben oder abzusenken oder Bodenandruckkräfte einzustellen. Der Zwischenrahmen behindert nicht die Funktionalität der Anbaugeräteanlenkung des Schleppers.

Vorteilhafterweise kann der genannte Zwischenrahmen mit seinen Schlepperkupplungsmitteln am Fronthubwerk des Schleppers angebaut werden, wobei das genannte Fronthubwerk des Schleppers seine Funktionalität behalten und die am Zwischenrahmen wiederum angebaute Anbaumaschine beispielsweise in Form eines Frontmähwerks oder auch den Zwischenrahmen mit der daran angebrachten Funktionsbaugruppe anheben und absenken kann. Die Schlepperkupplungsmittel des Zwischenrahmens sind dabei an die Anbaupunkte bzw. die Kupplungselemente des genannten Fronthubwerks angepasst und damit kompatibel, um den Zwischenrahmen am Fronthubwerk anbauen zu können. Die Maschinenkupplungsmittel des Zwischenrahmens spiegeln die Anbaupunkte bzw. Kupplungselemente des Fronthubwerks, um die Anbaumaschine am Zwischenrahmen anbauen zu können.

Der Zwischenrahmen kann grundsätzlich aber auch heckseitig am Schlepper angebaut werden, wobei die Schlepperkupplungsmittel des Zwischenrahmens mit den Heckanbau-Anlenkpunkten bzw. -Kupplungselementen des Schleppers kompatibel bzw. daran angepasst sein können. Die Maschinenkupplungsmittel des Zwischenrahmens spiegeln die genannten heckseitigen Anbaukupplungselemente des Schleppers, um auch bei heckseitiger Verwendung des Zwischenrahmens eine zum Heckanbau vorgesehene Anbaumaschine am Zwischenrahmen anbauen zu können.

Durch die doppelten bzw. zweifach vorgesehenen Kupplungsmittel des Zwischenrahmens ergibt sich aber auch eine größere Variabilität bezüglich des Anbaus und der Verteilung von Anbaumaschine und Arbeitsgerät. Einerseits kann der Zwischenrahmen in der beschriebenen Weise zwischen Anbaumaschine und Schlepper eingebaut werden und die Brücke zwischen Schlepper und Anbaumaschine bilden. Andererseits besteht aber auch die Option, die Anbaumaschine ohne Zwischenrahmen direkt am Schlepper anzubauen und gegebenenfalls den Zwischenrahmen mit dem Arbeitsgerät nicht zu verwenden oder am gegenüberliegenden Ende des Schleppers anzubauen. Letzteres kann vorteilhaft sein, wenn beispielsweise bei feuchten Böden die Anbaumaschine ohne zusätzliches Auskragen durch den Zwischenträger möglichst nahe am Schlepper montiert werden soll. Beispielsweise kann ein Frontmähwerk direkt ohne Zwischenrahmen am Schlepper angebaut werden, während das Arbeitsgerät mit dem Zwischenrahmen heckseitig am Schlepper angebaut wird, um beispielsweise die nächste Fahrgasse zu überwachen.

Werden Anbaumaschinenkombinationen mit front- und heckseitig anzubauenden Aggregaten verwendet, besteht zudem die Möglichkeit, den Zwischenrahmen wahlweise frontseitig zwischen dem Schlepper und dem Frontaggregat oder heckseitig zwischen dem Schlepper und dem Heckaggregat einzubauen.

Insbesondere können die Schlepperkupplungsmittel des Zwischenrahmens dazu ausgebildet und vorgesehen sein, mit der üblichen Dreipunkt-Anlenkung des Schleppers mechanisch gekoppelt zu werden, insbesondere also mit einem Oberlenker-Anlenkpunkt und zwei Unterlenker-Anlenkpunkten am Schlepper. Die Maschinenkupplungsmittel des Zwischenrahmens, an denen die Anbaumaschine angekoppelt werden kann, können die genannten Dreipunkt-Anlenkmittel des Schleppers spiegeln, das heißt dazu ausgebildet und vorgesehen sein, mit den Dreipunkt-Anlenkmitteln der Anbaumaschine mechanisch gekoppelt zu werden. Insbesondere können die genannten Maschinenkupplungsmittel des Zwischenrahmens einen Oberlenker-Anlenkpunkt sowie zwei Unterlenker-Anlenkpunkte für die Ober- und Unterlenker-Anlenkpunkte des Maschinenrahmens bzw. des Anbaubocks der Anbaumaschine aufweisen.

In vorteilhafter Weiterbildung der Erfindung können die genannten Schlepperkupplungsmittel und Maschinenkupplungsmittel des Zwischenrahmens, die einerseits den Anbau des Zwischenrahmens am Schlepper und andererseits an der Anbaumaschine ermöglichen, zueinander komplementär ausgebildet sein und/oder entsprechend den Geräte-Anlenkpunkten des Schleppers und den Schlepper-Anlenkpunkten der Anbaumaschine ausgebildet sein.

Die Schlepperkupplungsmittel und die Maschinenkupplungsmittel des Zwischenrahmens können jeweils in einer Ebene angeordnet sein, wobei die beiden Ebenen, das heißt die Ebene, in der die Schlepperkupplungsmittel angeordnet sind, und die Ebene, in der die Maschinenkupplungsmittel angeordnet sind, vorteilhafterweise zueinander parallel oder zumindest näherungsweise parallel angeordnet sein können. Eine solche Anordnung der Schlepper- und Maschinenkupplungsmittel in zueinander zumindest näherungsweise parallelen Ebenen macht es unnötig, die Anlenkung der Anbaumaschine bei Verwendung des Zwischenrahmens anzupassen. Die Anbaumaschine kann bei Verwendung des Zwischenrahmens gleichermaßen wie bei Nichtverwendung des Zwischenrahmens ohne Nachstellen der Anlenkpunkte bzw. der Ober- und Unterlenker angebaut werden.

Insbesondere können sich die beiden genannten Ebenen zumindest näherungsweise vertikal oder aufrecht erstrecken oder leicht spitzwinklig zu einer vertikalen Ebene geneigt sein, wenn der Zwischenrahmen in seiner bestimmungsgemäßen Einbaulage am Schlepper betrachtet wird.

Um bei der Verwendung des Zwischenrahmens keine übermäßigen Biegebelastungen im Zwischenrahmen zu haben und das Auskragen der Anbaumaschine vom Schlepper in Fahrtrichtung nicht unnötig zu vergrößern, liegen die Schlepperkupplungsmittel und die Maschinenkupplungsmittel des Zwischenrahmens vorteilhafterweise möglichst nahe beieinander und sind in Fahrtrichtung betrachtet im Wesentlichen nur so weit voneinander beabstandet, um eine Kollision der Kupplungsmittel des Schleppers mit den Kupplungsmitteln der Anbaumaschine zu vermeiden, wenn beide am Zwischenrahmen angekuppelt werden. Insbesondere kann der Abstand der vorgenannten beiden Ebenen, in denen die Schlepper- und Maschinenkupplungsmittel des Zwischenrahmens angeordnet sind, voneinander nur einen Bruchteil des Abstands der Unterlenker-Kupplungsmittel voneinander und/oder des Oberlenker-Anlenkpunkts von einem Unterlenker-Anlenkpunkt betragen. Beispielsweise kann der Abstand der beiden genannten Ebenen in Fahrtrichtung betrachtet weniger als 50% oder weniger als 25% des Höhenunterschieds zwischen dem Oberlenker-Anlenkpunkt und den Unterlenker-Anlenkpunkten betragen.

Um gewisse Toleranzen bzw. Abweichungen in der Position bzw. Geometrie der Anbaupunkte verschiedener Anbaumaschinen ausgleichen zu können, können in vorteilhafter Weiterbildung der Erfindung die Maschinenkupplungsmittel des genannten Zwischenrahmens, an denen die jeweilige Anbaumaschine angebaut werden kann, verstellbar ausgebildet sein, insbesondere derart, dass die verschiedenen Kupplungsmittel relativ zueinander in verschiedene Positionen gebracht werden können.

Vorteilhafterweise können die Maschinenkupplungsmittel des Zwischenrahmens zwei Unterlenker-Anlenkkupplungen umfassen, die am Maschinenrahmen höhenverstellbar und/oder querverstellbar und/oder in ihrem Abstand einstellbar gelagert sein können. Beispielsweise können die genannten Unterlenker-Kupplungselemente an einer Schiebeführung höhenverschieblich und/oder breitenverschieblich geführt und durch Fixiermittel, beispielsweise in Form eines Fixierbolzens, in einer jeweils gewünschten Position am Zwischenrahmen fixiert werden. Beispielsweise kann ein Lochbild an der genannten Führung und/oder an den Kupplungselementen vorgesehen sein, um durch Einstecken des Fixierbolzens verschiedene Positionen entsprechend dem Lochbild einstellen zu können. Alternativ oder zusätzlich kann auch eine Klemmung vorgesehen sein, um die Fixierung in verschiedenen Positionen sicherzustellen.

Alternativ oder zusätzlich zu einer solchen Schiebeführung können die verstellbaren Kupplungselemente der Maschinenkupplungsmittel des Zwischenrahmens aber auch verschwenkbar am Zwischenrahmen gelagert sein, beispielsweise mittels Schwenklenkern oder Tragarmen, die am Zwischenrahmen ein- oder mehrachsig gelenkig, beispielsweise mittels Kugelgelenken, auf- und niederwippbar und/oder horizontal verschwenkbar und/oder schräg verkippbar gelagert sein können. Zur Verstellung der besagten Schwenklenker oder Tragarme können längenveränderbare Verstellstreben vorgesehen sein, beispielsweise in Form einer Schraubspindel oder in Form eines Hydraulikzylinders. In einfacherer Ausbildung können die besagten Verstellstreben aber auch über ein Lochbild in verschiedenen Stellungen am Zwischenrahmen und/oder an den Tragarmen bzw. Schwenklenkern fixiert werden, um die gewünschte Schwenkstellung der Tragarme bzw. Schwenklenker einstellen zu können.

Eine horizontale Verschwenkung zumindest eines Kupplungselements kann den Querabstand zu einem anderen Kupplungselement, beispielsweise den Querabstand zweier Unterlenker-Kupplungselemente verändern bzw. einstellen. Eine vertikale Schwenkbewegung, die beispielsweise ein Oberlenker-Kupplungselement höhenverstellen kann, kann den vertikalen Abstand zwischen Oberlenker- und Unterlenker-Kupplungselementen einstellen. Ebenfalls kann eine solche vertikale Verstellung für die Unterlenker-Kupplungselemente vorgesehen werden.

Alternativ oder zusätzlich kann auch eine schräge Verschwenkbarkeit realisiert sein, die sowohl eine horizontale als auch eine vertikale Komponente umfassen kann, beispielsweise um zwei Unterlenker-Kupplungselemente gleichzeitig höhenzuverstellen und in der Breite bzw. in ihrem Abstand voneinander einzustellen.

In vorteilhafter Weiterbildung der Erfindung kann die zumindest eine Funktionsbaugruppe des Arbeitsgeräts, beispielsweise in Form eines Sensorbalkens, schwenkbar an dem Zwischenrahmen angelenkt sein, um die Funktionsbaugruppe gegenüber dem am Schlepper und/oder am an der Anbaumaschine montierten Geräteträger verstellen bzw. verschwenken zu können.

Generell kann die genannte Funktionsbaugruppe an dem Zwischenrahmen höhenverstellbar gelagert und/oder durch eine Hubvorrichtung relativ zum Zwischenrahmen höhenverstellt werden, insbesondere um die Funktionsbaugruppe aus einer abgesenkten Arbeitsstellung in eine angehobene Vorgewende- und/oder Transportstellung auszuheben und umgekehrt absenken zu können. Vorteilhafterweise kann die genannte Hubvorrichtung dabei als Hubschwenkvorrichtung ausgebildet sein, um die Funktionsbaugruppe aus der abgesenkten Arbeitsstellung in eine angehobene Vorgewendestellung und/oder eine ausgehobene Transportstellung nach oben verschwenken zu können.

Vorteilhafterweise kann die Funktionsbaugruppe aus einer liegenden Arbeitsstellung in eine aufrechte Transportstellung und ggf. in eine dazwischenliegende Vorgewendestellung verschwenkt werden. Die Funktionsbaugruppe kann hierzu vorteilhafterweise mit einem Endabschnitt oder einem Randabschnitt um eine liegende Schwenkachse schwenkbar am Zwischenrahmen gelagert sein, wobei die Schwenkvorrichtung einen Kraftheber beispielsweise in Form eines Hydraulikzylinders aufweisen kann, um die Funktionsbaugruppe um die genannte liegende, vorzugsweise näherungsweise in Fahrtrichtung weisende Schwenkachse ausheben zu können. Der genannte Kraftheber kann dabei gelenkig einerseits an der Funktionsbaugruppe und andererseits am Zwischenrahmen angelenkt sein.

Alternativ oder zusätzlich kann die Funktionsbaugruppe teleskopierbar und/oder quer zur Fahrtrichtung verschieblich am Zwischenrahmen gelagert sein, wobei auch hier ein Kraftheber zum Ein- und Austeleskopieren bzw. Querverschieben der Funktionsbaugruppe vorgesehen sein kann. Hierdurch kann in einfacher Weise die Position und Lage und/der Länge der Funktionsbaugruppe an das jeweilige Anbaumaschinenmodell, insbesondere an dessen Arbeitsbreite angepasst werden.

Die Funktionsbaugruppe des Arbeitsgeräts ist erfindungsgemäß zumindest zwischen zwei Betriebsmodi umschaltbar ausgebildet und/oder in ihrer Betriebsweise an verschiedene Anbaumaschinen anpassbar ausgebildet, wobei die Funktionsbaugruppe vorteilhafterweise eine elektronische Steuervorrichtung umfassen kann, die die Betriebsmodi der Funktionsbaugruppe steuert. Je nachdem, was für eine Anbaumaschine angebaut ist, stellt die Funktionsbaugruppe ihre Funktion um.

Vorteilhafterweise ist die Steuervorrichtung dabei adaptiv arbeitend ausgebildet und/oder selbst einstellend konfiguriert, derart, dass die Steuervorrichtung den Betriebsmodus umstellt und/oder die Funktionsweise anpasst in Abhängigkeit eines Eingangssignals, welches die jeweils anzukoppelnde Anbaumaschine identifiziert und/oder charakterisiert. Das genannte Eingangssignal kann dabei manuell über eine geeignete Eingabeeinrichtung eingegeben werden, oder auch
von einem Identifikationsbaustein automatisch bereitgestellt werden, wenn eine entsprechende Anbaumaschine an den Zwischenrahmen angekoppelt wird. Beispielsweise kann dies durch Anstecken eines Datenleitungssteckers erfolgen, der die Anbaumaschine mit der Steuervorrichtung verbindet.

Die genannten Betriebsmodi können dabei verschiedene Wirkungsweisen der Anbaumaschinen berücksichtigen und/oder an verschiedene landwirtschaftliche Funktionen der Anbaumaschinen angepasst sein.

Umfasst die Funktionsbaugruppe einen Sensorbalken bzw. eine Sensoreinrichtung zum Abtasten einer Fahrgasse, kann die Steuervorrichtung eine Auswerteeinrichtung beispielsweise zwischen einem Tiererkennungsmodus und einem Unkrauterkennungsmodus umschalten. In dem genannten Tiererkennungsmodus wertet die Auswerteeinrichtung die Sensorsignale auf das Vorhandensein eines Tieres in der abgetasteten Fahrgasse aus. Die Steuervorrichtung kann in Abhängigkeit der Auswertung des Sensorsignals bei Erkennen eines Tiers ein Aushubsignal und/oder ein Stoppsignal zum Ausheben und/oder Stoppen eines angebauten Mähwerks bereitstellen, um das Mähwerk auszuheben bzw. zu stoppen.

Im Unkrauterkennungsmodus kann die Steuervorrichtung die Signalauswerteeinrichtung dazu veranlassen, die Sensorsignale auf das Vorhandensein von Unkraut in der abgetasteten Fahrgasse auszuwerten. Wird ein nicht planmäßiger Bewuchs erkannt, kann eine an den Zwischenrahmen angebaute Pestizidspritze oder -ausbringvorrichtung von der Steuervorrichtung angesteuert werden, um Unkrautvertilgungsmittel auszubringen.

Alternativ oder zusätzlich kann die Steuervorrichtung die Auswerteeinrichtung auch in einen Bewuchs- und/oder Bodenbeschaffenheits-Erkennungsmodus schalten, in dem die Sensorsignale auf denen der abgetasteten Fahrgasse vorhandenen Bewuchs- oder vorhandenen Bewuchsdichte und/oder Bodenmerkmale wie Steineanteil auswertet. In Abhängigkeit der Auswertung kann dann die Steuervorrichtung 21 eine angebaute Düngemittelspritze oder -ausbringvorrichtung ansteuern, um gezielt Düngemittel ausbringen zu können, insbesondere an Stellen, die Düngemittel benötigen.

Je nach verwendeter Anbaumaschine können weitere Funtionsanpassungen in weiteren Betriebsmodi vorgenommen werden.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Ansicht eines landwirtschaftlichen Gespanns umfassend einen Schlepper, ein daran frontseitig angebautes Arbeitsgerät mit einer Funktionsbaugruppe in Form eines Sensorbalkens sowie eine Anbaumaschine in Form eines Mähwerks, das an den Zwischenrahmen des Arbeitsgeräts angebaut ist,
- Fig. 2:: eine perspektivische Ansicht des Schleppers und des daran frontseitig angebauten Arbeitsgeräts und dessen Funktionsbaugruppe in Form des Sensorbalkens, wobei die Anbaumaschine in Form des Mähwerks abgebaut ist, sodass der Zwischenrahmen des Arbeitsgeräts zu sehen ist,
- Fig. 3:: eine Frontansicht des Gespanns umfassend Schlepper, Arbeitsgerät mit Sensorbalken und Anbaumaschine in Form des Mähwerks aus Fig. 1, wobei der am Zwischenrahmen des Arbeitsgeräts gelagerte Sensorbalken in seiner abgesenkten Arbeitsstellung gezeigt ist,
- Fig. 4:: eine Frontansicht des landwirtschaftlichen Gespanns ähnlich Fig. 3, wobei der Sensorbalken des Arbeitsgeräts in seiner nach oben geschwenkten Transportstellung gezeigt ist,
- Fig. 5:: eine Seitenansicht des landwirtschaftlichen Gespanns aus den vorhergehenden Figuren, wobei der Sensorbalken des zwischengeschalteten Arbeitsgeräts in der nach oben verschwenkten Transportstellung gezeigt ist,
- Fig. 6:: eine Seitenansicht des Zwischenrahmens des Arbeitsgeräts, die die Anordnung der Schlepperkupplungsmittel und der Maschinenkupplungsmittel des Zwischenrahmens relativ zueinander zeigt,
- Fig. 7:: eine ausschnittsweise, perspektivische Darstellung des Arbeitsgeräts, die den als Zwischenrahmen ausgebildeten Geräteträger nebst dessen Maschinen- und Schlepperkupplungsmitteln sowie die schwenkbar am Zwischenrahmen gelagerte Funktionsbaugruppe in Form des Sensorbalkens sowie das zugeordnete Hubschwenkwerk zeigt, und
- Fig. 8:: eine schematische Draufsicht auf eine durch die doppelt vorgesehenen Kupplungsmittel mögliche Anbauoption, gemäß der die Anbaumaschine direkt frontseitig am Schlepper und der Zwischenrahmen mit dem Arbeitsgerät heckseitig am Schlepper angebaut ist.

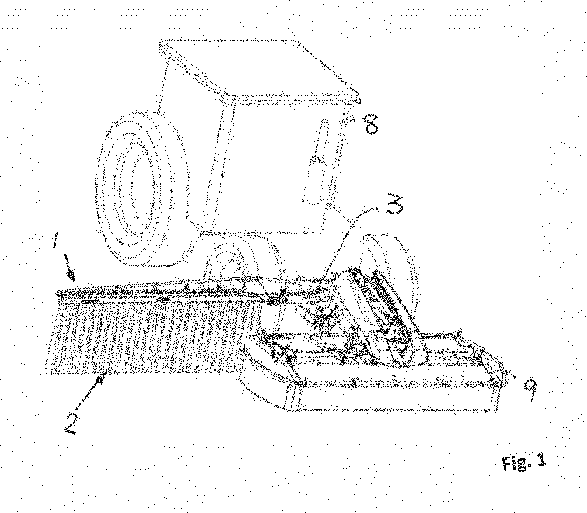

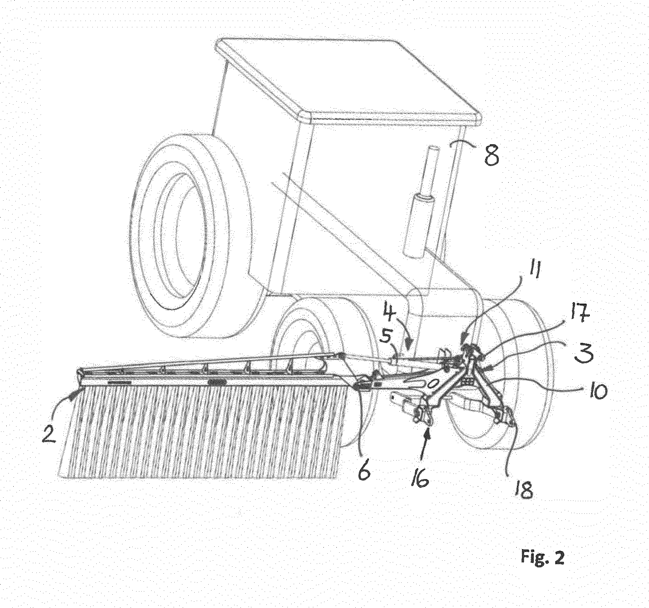

Wie die Figuren zeigen, umfasst das Arbeitsgerät 1 eine Funktionsbaugruppe 2, die beispielsweise eine Sensoreinrichtung zum Abtasten einer Fahrgasse beispielsweise auf dort befindliche Tiere hin umfassen kann. Insbesondere kann die genannte Funktionsbaugruppe 2 in Form eines Funktions-, insbesondere Sensorbalkens ausgebildet sein, der sich in seiner Arbeitsstellung quer zur Fahrtrichtung liegend über der interessierenden, insbesondere abzutastenden Fahrgasse erstrecken kann, vgl. Figur 1 und Figur 2. Die genannte Sensoreinrichtung kann beispielsweise eine Reihe von Ultraschallsensoren oder optischen Sensoren umfassen, die gemeinsam die interessierende Fahrgasse abtasten können, wobei eine Auswerteeinrichtung der Funktionsbaugruppe 2 die Signale der Sensoreinrichtung auswerten kann, beispielsweise um in der Fahrgasse befindliche Kitze zu erkennen. Je nach Ausbildung der Funktionsbaugruppe können aber auch andere Funktionsbausteine vorgesehen sein.

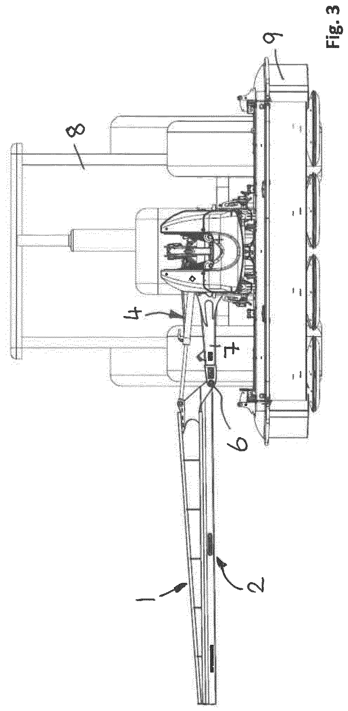

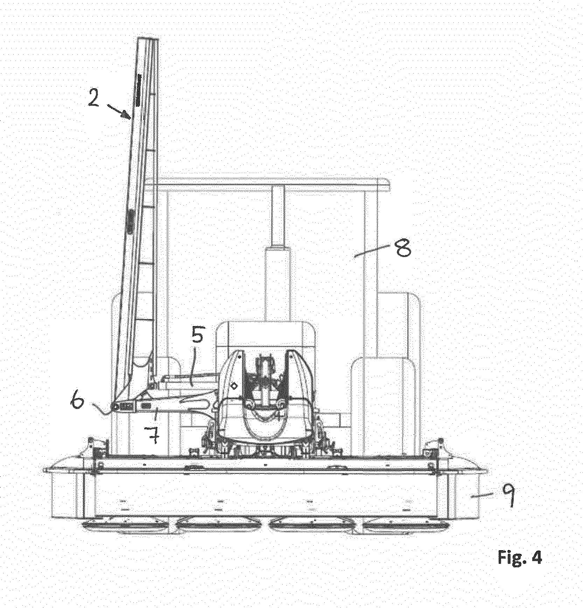

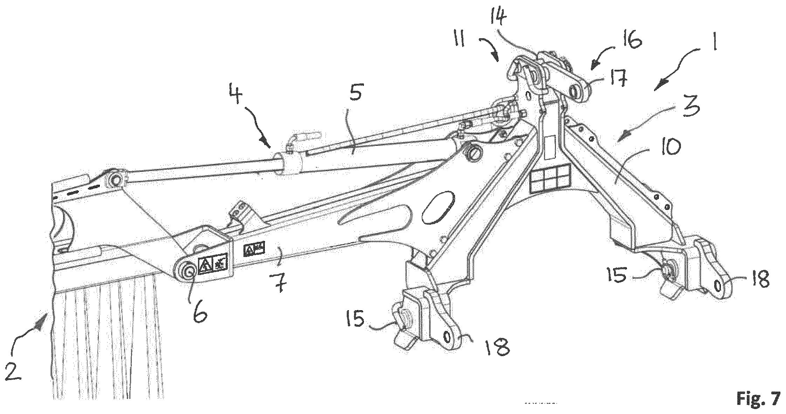

Wie die Figuren 2 und 7 zeigen, kann die genannte Funktionsbaugruppe 2 vorteilhafterweise an einem Geräteträger 3 aufgehängt, insbesondere beweglich gelagert sein, um in verschiedene Stellungen, insbesondere Arbeits- und/oder Vorgewende- und/oder Transportstellungen verbracht werden zu können. Vorteilhafterweise kann die Funktionsbaugruppe 2 durch eine Hubvorrichtung aus einer abgesenkten Arbeitsstellung in eine angehobene Vorgewende- und/oder Transportstellung angehoben und umgekehrt abgesenkt werden, wobei die genannte Hubvorrichtung vorteilhafterweise als Hubschwenkvorrichtung 4 ausgebildet sein kann, die die Funktionsbaugruppe 2 aus einer abgesenkten Arbeitsstellung in eine angehobene Vorgewende- und/oder Transportstellung verschwenken kann. Wie ein Vergleich der Figuren 3 und 4 verdeutlicht, kann die Funktionsbaugruppe 2 durch die Hubschwenkvorrichtung 4 aus einer liegenden Arbeitsstellung in eine aufrechte Transportstellung verbracht werden, wobei eine Zwischenstellung als Vorgewendestellung genutzt werden kann.

Wie Figur 7 zeigt, kann die Hubschwenkvorrichtung 4 einen Kraftheber 5 beispielsweise in Form eines Hydraulikzylinders umfassen, der einerseits gelenkig an der Funktionsbaugruppe 2 und andererseits gelenkig an dem Geräteträger 3 angelenkt sein kann, um die Funktionsbaugruppe 2 relativ zum Geräteträger 3 verschwenken zu können. Die genannte Funktionsbaugruppe 2 kann hierzu um eine liegende Schwenkachse 6 schwenkbar am Geräteträger 3 gelagert sein, wobei sich die genannte Schwenkachse 6 liegend, vorzugweise zumindest näherungsweise fahrtrichtungsparallel erstrecken kann.

Die genannte Schwenkachse 6 kann dabei vorteilhafterweise derart angeordnet sein, dass sie sich zumindest näherungsweise im Bereich einer Außenkontur des Schleppers 7 erstreckt oder von der besagten Schlepperaußenkontur ein kleineres Stück weit nach innen beabstandet, um die Funktionsbaugruppe 2 in der nach oben geschwenkten Transportstellung innerhalb der Außenkontur des Schleppers zu haben. Wie Figur 7 zeigt, kann der Geräteträger 3 hierfür einen quer zur Fahrtrichtung seitlich auskragenden Tragarm 7 umfassen, an dem die Funktionsbaugruppe 2 um die Schwenkachse 6 schwenkbar gelagert ist.

Um das Arbeitsgerät 1 zwischen Schlepper 8 und Anbaumaschine 9 montieren zu können, ist der genannte Geräteträger 3 als Zwischenrahmen 10 ausgebildet bzw. umfasst er einen solchen Zwischenrahmen 10, der einerseits am Schlepper 8 und andererseits an der Anbaumaschine 9 angebaut werden kann, sodass die Anbaumaschine 9 durch den Zwischenrahmen 10 am Schlepper 8 aufgehängt ist bzw. daran angebaut ist.

Der genannte Zwischenrahmen 10 umfasst hierbei zwei Sätze von Kupplungsmitteln, die einerseits dem Anbau an den Schlepper 8 und andererseits dem Anbau an die Anbaumaschine 9 dienen, wobei die genannten zwei Sätze von Kupplungsmitteln vorteilhafterweise einander entsprechend oder zueinander komplementär ausgebildet sein können.

Insbesondere umfasst der Zwischenrahmen 10 einerseits Schlepperkupplungsmittel 11 zum Ankuppeln des Zwischenrahmens 10 an die Anlenkpunkte der Anbaugeräte-Anlenkung 12 des Schleppers 8. Wie die Figuren zeigen, kann der Zwischenrahmen 10 zum frontseitigen Anbau an den Schlepper 8 ausgebildet und können die genannten Schlepperkupplungsmittel 11 an die frontseitigen Anlenkpunkte des Schleppers 8 angepasst sein. Insbesondere können die genannten Schlepperkupplungsmittel 11 dazu ausgebildet sein, an das Fronthubwerk 13 des Schleppers 8 angebaut zu werden. Ein solches Fronthubwerk 13 kann beispielsweise eine Dreipunktanlenkung umfassen, die einen Oberlenker-Anlenkpunkt und zwei Unterlenker-Anlenkpunkte aufweisen kann. Dementsprechend kann der Zwischenrahmen 10 über die Schlepperkupplungsmittel 11 durch eine Dreipunktanlenkung am Fronthubwerk 13 angebaut werden.

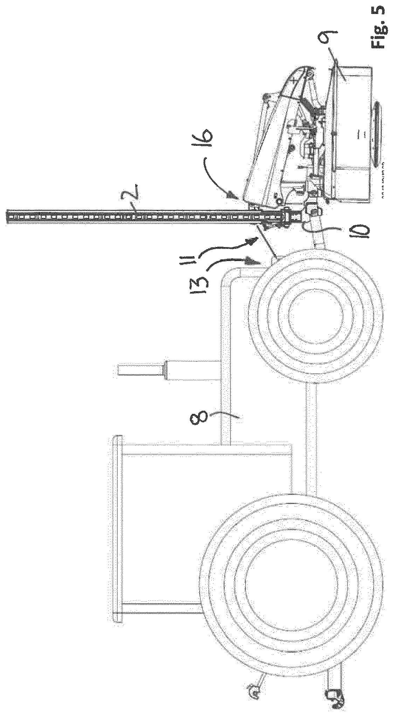

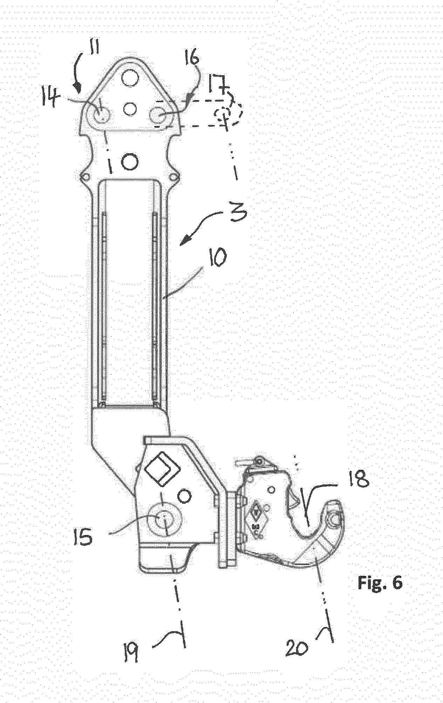

Wie die Figuren 6 und 7 zeigen, können die Schlepperkupplungsmittel 11 des Zwischenrahmens 10 ein Oberlenker-Kupplungselement 14 beispielsweise in Form eines Kupplungsbolzens und zwei voneinander beabstandete Unterlenker-Kupplungselemente 15 beispielsweise in Form eines Querbolzens umfassen, sodass der Zwischenrahmen 10 durch einen Oberlenker und zwei Unterlenker am Fronthubwerk 13 des Schleppers 8 angebaut werden kann, vgl. Figur 5. Grundsätzlich wäre es aber auch möglich, die Schlepperkupplungsmittel 11 in anderer Weise auszubilden bzw. an die jeweils vorhandenen Kupplungsmittel des Fronthubwerks des Schleppers anzupassen. Wenn diese beispielsweise einen Schnellkupplerrahmen beispielsweise in Form eines formschlüssig wirkenden Rahmendreiecks aufweist, könnten die Schlepperkupplungsmittel 11 des Zwischenrahmens 10 dazu komplementäre Schnellkupplerkonturen beispielsweise in Form eines auf die Dreieckskontur passenden Stülprahmenprofils umfassen.

Um die Anbaumaschine 9 an den Zwischenrahmen 10 anbauen zu können, umfasst der genannte Zwischenrahmen 10 andererseits Maschinenkupplungsmittel 16, die an die Anlenkvorrichtung und/oder die Anbaupunkte der Anbaumaschine 9 angepasst sind. Insbesondere können die Maschinenkupplungsmittel 16 des Zwischenrahmens 10 die Anbaugeräte-Anlenkung 12 des Schleppers 8 spiegeln, sodass die Anbauvorrichtung der Anbaumaschine 9, die an sich dazu bestimmt ist, am Fronthubwerk 13 des Schleppers 8 angebaut zu werden, an den Maschinenkupplungsmitteln 16 des Zwischenrahmens 10 montiert werden können.

Insbesondere können die Maschinenkupplungsmittel 16 ein Oberlenker-Kupplungselement 17 und zwei Unterlenker-Kupplungselemente 18 aufweisen, die die Oberlenker- und Unterlenker-Kupplungsmittel des Schleppers 8 nachbilden können. Die Anbaumaschine 9 kann mit ihren Oberlenker- und Unterlenker-Anbaupunkten an die genannten Oberlenker- und Unterlenker-Kupplungselemente 17 und 18 des Zwischenrahmens 10 angebaut werden, insbesondere damit formschlüssig verriegelt werden, beispielsweise durch Querbolzen.

Wie Figur 6 zeigt, können Unterlenker-Kupplungselemente 18 beispielsweise Einhängemäuler zum Einhängen der maschinenseitigen Anlenkpunkte bilden, oder wie dies Figur 7 zeigt, auch Steckkupplungsplatten mit Querbohrungen zum Einstecken eines Kupplungsbolzens aufweisen, je nachdem, wie die Anbaumaschine 9 hinsichtlich ihrer Anbaupunkte ausgebildet ist.

Wie Figur 6 verdeutlicht, können die Schlepperkupplungsmittel 11 und die Maschinenkupplungsmittel 16 des Zwischenrahmens 10 in zwei zueinander zumindest näherungsweise parallelen, insbesondere aufrechten Ebenen 19 und 20 angeordnet sein, sodass die Anbaumaschine 9 ohne Verstellung der Anbauvorrichtung wahlweise an den Zwischenrahmen 10 oder direkt an den Schlepper 8 angebaut werden kann.

Vorteilhafterweise sind die beiden Ebenen 19 und 20 nahe beieinanderliegend angeordnet bzw. nur so weit voneinander beabstandet, dass die Kupplungsmittel kollisionsfrei montiert werden können. Wie Figur 6 zeigt, kann der Abstand der beiden Ebenen 19 und 20, in denen die Schlepperkupplungsmittel 11 einerseits und die Maschinenkupplungsmittel 16 andererseits angeordnet sind, einen Abstand voneinander besitzen, der weniger als 25% des Höhenunterschieds zwischen Oberlenker- und Unterlenker-Kupplungselementen beträgt.

Die Schlepper- und/oder Maschinenkupplungsmittel des Zwischenrahmens 10 können positionsveränderbar bzw. verstellbar am Korpus des Zwischenrahmens 10 angebracht sein. Beispielsweise können die Unterlenker-Kupplungselemente 18 der Maschinenkupplungsmittel 16 in ihrem Abstand voneinander einstellbar und/oder höhenverstellbar am Zwischenrahmen 10 gelagert und in verschiedenen Stellungen bzw. Positionen fixiert werden. Beispielsweise können die genannten Unterlenker-Kupplungselemente 18 in einer Schiebeführung am Korpus des Zwischenrahmens 10 höhenverschieblich geführt und durch Abstecken mit einem Verriegelungsbolzen in einer gewünschten Stellung fixiert werden. Alternativ oder zusätzlich kann auch eine Verstellbarkeit des Oberlenker-Kupplungselements 17 der Maschinenkupplungsmittel 16 vorgesehen sein, um den Oberlenker-Kupplungspunkt des Zwischenrahmens 10 in seiner Position verstellen zu können, insbesondere gegenüber den Unterlenkerpunkten variieren zu können.

Wie die Figuren zeigen, kann die Anbaumaschine 9 beispielsweise in Form einer Mähmaschine ausgebildet sein. Bei frontseitigem Anbau kann dies ein Frontmähwerk umfassen.

Grundsätzlich kann das Arbeitsgerät 1 mit dem Zwischenrahmen 10 aber auch an die heckseitige Anbaugerätevorrichtung des Schleppers 8 angebaut werden, insbesondere auch über eine Dreipunktanlenkung, wobei in diesem Fall auch die Anbaumaschine 9 heckseitig über den Zwischenrahmen 10 am Schlepper 8 angebaut werden kann.

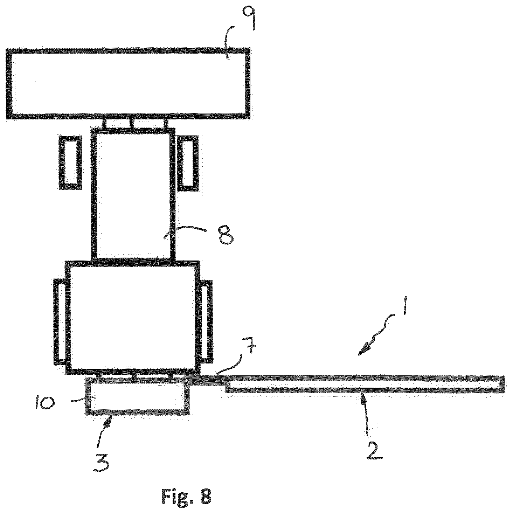

Wie ein Vergleich der Figuren 1 und 8 zeigt, ergeben sich durch die zweifach vorgesehenen Kupplungsmittel des Zwischenrahmens 10 zudem verschiedene Wahlmöglichkeiten für den Anbau der Anbaumaschine 9. Während Fig. 1 den schon beschriebenen Anbau der Anbaumaschine 9 über den Zwischenrahmen 10 an die Front des Schleppers 8 zeigt, kann die Anbaumaschine 9 aber auch direkt ohne den Zwischenrahmen 10 an die Front des Schleppers 8 angebaut werden, wobei in diesem Fall die Option besteht, das Arbeitsgerät 1 über den Zwischenrahmen 3 heckseitig an dem Schlepper 8 anzubauen. Es versteht sich, dass die Anbaumaschine 9 auch gänzlich ohne das Arbeitsgerät 1 betrieben werden könnte. Weiterhin besteht die Möglichkeit, bei der in Fig. 8 dargestellten Konfiguration zusätzlich zum Frontmähwerk bzw. dem Frontaggregat auch noch ein Heckmähwerk bzw. Heckaggregat anzubauen, wobei letzteres dann über den Zwischenrahmen 3 an den Schlepper 8 angebaut werden kann.

Ergänzend zu diesen Optionen könnte die Anordnung im Vergleich zu Fig. 8 auch umgedreht werden, und zwar dahingehend, dass der Zwischenrahmen 10 frontseitig an den Schlepper 8 angebaut wird und das Heckaggregat der Arbeitsmaschine 9 direkt am Schlepper 8 angebaut wird. Ferner ist es auch noch möglich, sowohl heckseitig als auch frontseitig einen Zwischenrahmen 10 zu verbauen, beispielsweise dann, wenn zwei ergänzende Arbeitsgeräte 1 verbaut werden sollen.

Die Funktionsbaugruppe 2 des Arbeitsgeräts 1 ist erfindungsgemäß zumindest zwischen zwei Betriebsmodi umschaltbar ausgebildet und/oder in ihrer Betriebsweise an verschiedene Anbaumaschinen 9 anpassbar ausgebildet, wobei die Funktionsbaugruppe 2 vorteilhafterweise eine elektronische Steuervorrichtung 21 umfassen kann, die die Betriebsmodi der Funktionsbaugruppe steuert.

Vorteilhafterweise kann die Steuervorrichtung 21 dabei adaptiv arbeitend ausgebildet und/oder selbst einstellend konfiguriert sein, insbesondere derart, dass die Steuervorrichtung 21 den Betriebsmodus umstellt und/oder die Funktionsweise anpasst in Abhängigkeit eines Eingangssignals, welches die jeweils anzukoppelnde Anbaumaschine identifiziert und/oder charakterisiert. Das genannte Eingangssignal kann dabei manuell über eine geeignete Eingabeeinrichtung eingegeben werden, oder auch von einem Identifikationsbaustein automatisch bereitgestellt werden, wenn eine entsprechende Anbaumaschine 8 an den Zwischenrahmen 10 angekoppelt wird. Beispielsweise kann dies durch Anstecken eines Datenleitungssteckers erfolgen, der die Anbaumaschine mit der Steuervorrichtung 21 verbindet.

Die genannten Betriebsmodi können dabei verschiedene Wirkungsweisen der Anbaumaschinen berücksichtigen und/oder an verschiedene landwirtschaftliche Funktionen der Anbaumaschinen angepasst sein.

Umfasst die Funktionsbaugruppe 2 einen Sensorbalken bzw. eine Sensoreinrichtung zum Abtasten einer Fahrgasse, kann die Steuervorrichtung 21 eine Auswerteeinrichtung beispielsweise zwischen einem Tiererkennungsmodus und einem Unkrauterkennungsmodus umschalten. In dem genannten Tiererkennungsmodus wertet die Auswerteeinrichtung die Sensorsignale auf das Vorhandensein eines Tieres in der abgetasteten Fahrgasse aus. Die Steuervorrichtung 21 kann in Abhängigkeit der Auswertung des Sensorsignals bei Erkennen eines Tiers ein Aushubsignal und/oder ein Stoppsignal zum Ausheben und/oder Stoppen eines angebauten Mähwerks bereitstellen, um das Mähwerk auszuheben bzw. zu stoppen.

Im Unkrauterkennungsmodus kann die Steuervorrichtung 21 die Signalauswerteeinrichtung dazu veranlassen, die Sensorsignale auf das Vorhandensein von Unkraut in der abgetasteten Fahrgasse auszuwerten. Wird ein nicht planmäßiger Bewuchs erkannt, kann eine an den Zwischenrahmen 10 angebaute Pestizidspritze oder - ausbringvorrichtung von der Steuervorrichtung 21 angesteuert werden, um Unkrautvertilgungsmittel auszubringen.

Alternativ oder zusätzlich kann die Steuervorrichtung 21 die Auswerteeinrichtung auch in einen Bewuchs- und/oder Bodenbeschaffenheits-Erkennungsmodus schalten, in dem die Sensorsignale auf denen der abgetasteten Fahrgasse vorhandenen Bewuchs- oder vorhandenen Bewuchsdichte und/oder Bodenmerkmale wie Steineanteil auswertet. In Abhängigkeit der Auswertung kann dann die Steuervorrichtung 21 eine angebaute Düngemittelspritze oder -ausbringvorrichtung ansteuern, um gezielt Düngemittel ausbringen zu können, insbesondere an Stellen, die Düngemittel benötigen.

## Patentansprüche

1. Landwirtschaftliches Arbeitsgerät mit einer Funktionsbaugruppe (2), insbesondere in Form eines Sensorbalkens zum sensorischen Abtasten einer Fahrgasse, und einem Geräteträger (3), an dem die genannte Funktionsbaugruppe (2) angeordnet ist, wobei der Geräteträger (3) Verbindungsmittel zum Verbinden des Arbeitsgeräts (1) mit einer landwirtschaftlichen Anbaumaschine (9), die zum Anbau an einen Schlepper (8) vorgesehen ist, aufweist, wobei der Geräteträger (3) als Zwischenrahmen (10) zum Einbau zwischen Schlepper (8) und Anbaumaschine (9) ausgebildet ist, der einerseits Schlepperkupplungsmittel (11) zum Ankuppeln des Zwischenrahmens (10) an den Schlepper (8) und andererseits Maschinenkupplungsmittel (16) zum Ankuppeln der Anbaumaschine (9) an den Zwischenrahmen (10) aufweist, wobei die Funktionsbaugruppe (2) zumindest zwei Betriebsmodi aufweist, **dadurch gekennzeichnet, dass** in den zumindest zwei Betriebsmodi die Funktion der Funktionsbaugruppe (2) an verschiedene Anbaumaschinenmodelle oder -typen angepasst ist, und Umschaltmittel zum halb- oder vollautomatischen Umschalten zwischen den zumindest zwei Betriebsmodi in Abhängigkeit einer jeweils an den Zwischenrahmen (10) angebauten Anbaumaschine (9) aufweist, wobei die genannten Umschaltmittel Auswahlmittel zum Auswählen eines von mehreren Anbaumaschinenmodellen oder -typen umfassen und dazu ausgebildet sind, in Abhängigkeit eines jeweils ausgewählten Anbaumaschinenmodells oder -typs den dazu passenden Betriebsmodus einzustellen, und/oder die Umschaltmittel dazu ausgebildet sind, in Abhängigkeit eines Identifikationssignals, das ein jeweils angebautes Anbaumaschinenmodell oder einen angebauten Anbaumaschinentyp identifiziert, automatisch den dazu passenden Betriebsmodus auszuwählen.

2. Landwirtschaftliches Arbeitsgerät nach dem vorhergehenden Anspruch, wobei die Schlepperkupplungsmittel (11) des Zwischenrahmens (10) komplementär zu den Maschinenkupplungsmitteln (16) des Zwischenrahmens (10) ausgebildet und/oder die Maschinenkupplungsmittel (16) entsprechend der Anbaugeräteanlenkung des Schleppers (8) ausgebildet sind.

3. Landwirtschaftliches Arbeitsgerät nach einem der vorhergehenden Ansprüche, wobei die Schlepperkupplungsmittel (11) und die Maschinenkupplungsmittel (16) des Zwischenrahmens (10) jeweils als Dreipunktanlenkung ausgebildet sind.

4. Landwirtschaftliches Arbeitsgerät nach einem der vorhergehenden Ansprüche, wobei die Schlepperkupplungsmittel (11) des Zwischenrahmens (10) an die Anlenkpunkte eines Fronthubwerks (13) des Schleppers (8) angepasst sind.

5. Landwirtschaftliches Arbeitsgerät nach einem der vorhergehenden Ansprüche, wobei die genannten oder weitere Schlepperkupplungsmittel (11) des Zwischenrahmens (10) an eine heckseitige Anlenkvorrichtung des Schleppers (8) formangepasst sind.

6. Landwirtschaftliches Arbeitsgerät (1) nach einem der vorhergehenden Ansprüche, wobei die Schlepperkupplungsmittel (11) des Zwischenrahmens (10) eine erste Ebene (19) aufspannen und die Maschinenkupplungsmittels (16) des Zwischenrahmens (10) eine zweite Ebene (20) aufspannen, wobei die genannten ersten und zweiten Ebenen (19, 20) zueinander zumindest näherungsweise parallel, insbesondere aufrecht angeordnet sind.

7. Landwirtschaftliches Arbeitsgerät nach einem der vorhergehenden Ansprüche, wobei eine Beabstandung der Schlepperkupplungsmittel (11) des Zwischenrahmens (10) von den Maschinenkupplungsmitteln (16) des Zwischenrahmens (10) in Fahrtrichtung weniger als 50% oder weniger als 25% des Höhenunterschieds von einem Oberlenkerkupplungselement (14; 17) zu Unterlenkerkupplungselementen (15; 18) des Zwischenrahmens (10) beträgt.

8. Landwirtschaftliches Arbeitsgerät nach einem der vorhergehenden Ansprüche, wobei die Maschinenkupplungsmittel (16) des Zwischenrahmens (10) relativ zueinander lageverstellbare Kupplungselemente (17, 18) umfassen.

9. Landwirtschaftliches Arbeitsgerät nach dem vorhergehenden Anspruch, wobei die lageverstellbaren Kupplungselemente verstellbar am Zwischenrahmen (10) befestigte Unterlenkerkupplungselemente (18) und/oder ein relativ zu den Unterlenkerkupplungselementen (18) verstellbar am Zwischenrahmen (10) befestigtes Oberlenkerkupplungselement (17) umfassen.

10. Landwirtschaftliches Arbeitsgerät nach einem der vorhergehenden Ansprüche, wobei die Funktionsbaugruppe (2) durch eine Hubvorrichtung, insbesondere eine Hubschwenkvorrichtung (4), an dem Zwischenrahmen (10) höhenverstellbar, insbesondere höhenverschwenkbar angebracht ist.

11. Landwirtschaftliches Arbeitsgerät nach dem vorhergehenden Anspruch, wobei die Funktionsbaugruppe (2) an dem Zwischenrahmen (10) um eine liegende, vorzugsweise zumindest näherungsweise fahrtrichtungsparallele, Schwenkachse (6) schwenkbar gelagert ist und die Hubschwenkvorrichtung (4) einen Kraftheber (5) zum Verschwenken der Funktionsbaugruppe (2) aus einer abgesenkten Arbeitsstellung in eine angehobene Vorgewende- und/oder Transportstellung aufweist.

12. Landwirtschaftliches Arbeitsgerät nach einem der vorhergehenden Ansprüche, wobei die Funktionsbaugruppe (2) eine Sensoreinrichtung, insbesondere einen Sensorbalken, zum sensorischen Abtasten einer Fahrgasse aufweist.

13. Landwirtschaftliches Arbeitsgerät nach dem vorhergehenden Anspruch, wobei die Funktionsbaugruppe (2) eine elektronische Auswerteeinrichtung zum Auswerten der Sensorsignale der Sensoreinrichtung auf ein interessierendes, sich in der Fahrgasse befindliches Objekt sowie eine Steuervorrichtung (21) zum Bereitstellen eines Steuersignals für den Schlepper (8) und/oder für die Anbaumaschine (9) in Abhängigkeit der Signalauswertung der Auswerteeinrichtung aufweist.

14. Landwirtschaftliches Arbeitsgerät nach dem vorhergehenden Anspruch, wobei das Steuersignal zumindest einen der folgenden Signaltypen umfasst:
- ein Lenkhilfesignal zum Unterstützen des Lenkens des Schleppers (8),
- ein Fahrgeschwindigkeitssignal zum Beeinflussen der Fahrgeschwindigkeit des Schleppers (8),
- ein Aushubsignal zum Ausheben der Anbaumaschine (9),
- ein Notstoppsignal zum Stoppen eines Arbeitsaggregats der Anbaumaschine (9),
- ein Ausbringsignal zum Ausbringen von Dünger oder Pestizid.

15. Landwirtschaftliches Arbeitsgerät nach einem der vorhergehenden Ansprüche, wobei die Auswerteeinrichtung zum Auswerten der Sensorsignale der Sensoreinrichtung zumindest zwei der folgenden Betriebsmodi umfasst:
- einen Tiererkennungsmodus zum Erkennen eines in der Fahrgasse befindlichen Tieres,
- einen Unkrauterkennungsmodus zum Erkennen von Unkraut und/oder unerwünschtem Bewuchs in der Fahrgasse,
- einen Düngebedarfsmodus zum Bestimmen der Bewuchsdichte und/oder der Bodenbeschaffenheit in der Fahrgasse,
- einen Schwaderkennungsmodus zum Bestimmen der Lage und/oder des Volumens eines Erntegutschwads,
wobei die vorgenannten Umschaltmittel dazu ausgebildet sind, bei Ankuppeln einer Mähmaschine den Tiererkennungsmodus einzuschalten und/oder bei Ankuppeln einer Pestizidausdüngevorrichtung den Unkrauterkennungsmodus einzuschalten und/oder bei Ankuppeln einer Düngerausbringvorrichtung den Düngerbedarfsmodus einzuschalten und/oder bei Ankuppeln einer Ballenpresse oder eines Ladewagens den Schwaderkennungsmodus einzuschalten.

16. Landwirtschaftliche Arbeitsgerätekombination umfassend eine Anbaumaschine (9) zum Anbau an einen Schlepper (8), wobei die Anbaumaschine (9) einen Anbaubock mit drei Anbaupunkten zum Anbau an den Schlepper (8) aufweist, sowie ein Arbeitsgerät (1), das gemäß einem der Ansprüche 1 bis 15 ausgebildet ist und mit den Anbaupunkten des Anbaubocks der Anbaumaschine lösbar gekuppelt ist.

17. Landwirtschaftliche Arbeitsgerätekombination gemäß dem vorhergehenden Anspruch, wobei die Anbaumaschine eine Mähmaschine ist und das Arbeitsgerät als Funktionsbaugruppe einen Sensorbalken zum Abtasten einer von der Mähmaschine zu bearbeitenden Fahrgasse aufweist.

18. Landwirtschaftliches Gespann mit einem Schlepper (8), einem Arbeitsgerät (1), das gemäß einem der Ansprüche 1 bis 15 ausgebildet ist, sowie einer Anbaumaschine (9), die wahlweise über den Zwischenrahmen (10) des Arbeitsgeräts (1) an dem Schlepper (8) oder direkt ohne den Zwischenrahmen (10) an dem Schlepper (8) anbaubar ist.

19. Landwirtschaftliches Gespann nach dem vorhergehenden Anspruch, wobei das Arbeitsgerät (1) über den Zwischenrahmen (10) heckseitig am Schlepper (8) angebaut ist und ein Frontaggregat der Anbaumaschine (9) direkt an einem Fronthubwerk (13) des Schleppers (8) angebaut ist.

## Claims

1. Agricultural implement with a functional assembly (2), in particular in the form of a sensor bar for sensorial scanning of a travel lane, and an implement carrier (3) on which the said functional assembly (2) is arranged, wherein the implement carrier (3) comprises connecting means for connecting the implement (1) to an agricultural attachment machine (9) which is provided for attachment to a tractor (8), wherein the implement carrier (3) is configured as an intermediate frame (10) for installation between the tractor (8) and the attachment machine (9), which frame on the one hand comprises tractor coupling means (11) for coupling the intermediate frame (10) to the tractor (8) and on the other hand machine coupling means (16) for coupling the attachment machine (9) to the intermediate frame (10), wherein the functional assembly (2) comprises at least two operating modes, **characterized in that** in the at least two operating modes the function of the functional assembly (2) is adapted to different attachment machine models or types, and comprises switching means for semi-automatic or fully automatic switching between the at least two operating modes depending on an attachment machine (9) respectively attached to the intermediate frame (10), wherein switching means comprise selection means for selecting one of a plurality of attachment machine models or types and are configured, depending on a respectively selected attachment machine model or type, to set the operating mode suitable for it, and/or the switching means are configured to automatically select the corresponding operating mode depending on an identification signal which identifies a respectively mounted attachment machine model or attachment machine type.

2. Agricultural implement according to the preceding claim, wherein the tractor coupling means (11) of the intermediate frame (10) are configured complementary to the machine coupling means (16) of the intermediate frame (10) and/or the machine coupling means (16) are configured according to the implement linkage of the tractor (8).

3. Agricultural implement according to any one of the preceding claims, wherein the tractor coupling means (11) and the machine coupling means (16) of the intermediate frame (10) are each configured as a three-point linkage.

4. Agricultural implement according to any one of the preceding claims, wherein the tractor coupling means (11) of the intermediate frame (10) are adapted to the articulation points of a front lifting unit (13) of the tractor (8).

5. Agricultural implement according to any one of the preceding claims, wherein said or further tractor coupling means (11) of the intermediate frame (10) are adapted in shape to a rear-side linkage device of the tractor (8).

6. Agricultural implement (1) according to any one of the preceding claims, wherein the tractor coupling means (11) of the intermediate frame (10) span a first plane (19) and the machine coupling means (16) of the intermediate frame (10) span a second plane (20), wherein said first and second planes (19, 20) are arranged at least approximately parallel, in particular upright, to each other.

7. Agricultural implement according to any one of the preceding claims, wherein a spacing of the tractor coupling means (11) of the intermediate frame (10) from the machine coupling means (16) of the intermediate frame (10) in the direction of travel is less than 50% or less than 25% of the difference in height from an upper link coupling element (14; 17) to lower link coupling elements (15; 18) of the intermediate frame (10).

8. Agricultural implement according to any one of the preceding claims, wherein the machine coupling means (16) of the intermediate frame (10) comprise coupling elements (17, 18) which are positionally adjustable relative to each other.

9. Agricultural implement according to the preceding claim, wherein said positionally adjustable coupling elements comprise lower link coupling elements (18) adjustably fastened to said intermediate frame (10) and/or an upper link coupling element (17) fastened to said intermediate frame (10) and relatively adjustable to said lower link coupling elements (18).

10. Agricultural implement according to any one of the preceding claims, wherein the functional assembly (2) is attached to the intermediate frame (10) in a height-adjustable, in particular height-pivotable manner by means of a lifting device, in particular a lifting pivot device (4).

11. Agricultural implement according to the preceding claim, wherein the functional assembly (2) is pivotably mounted on the intermediate frame (10) about a horizontal pivot axis (6), which is preferably at least approximately parallel to the direction of travel, and the lifting pivot device (4) comprises a power lift (5) for pivoting the functional assembly (2) from a lowered working position into a raised headland and/or transport position.

12. Agricultural implement according to any of the preceding claims, wherein the functional assembly (2) comprises a sensor device, in particular a sensor bar, for sensorial scanning of a travel lane.

13. Agricultural implement according to the preceding claim, wherein the functional assembly (2) comprises an electronic evaluation device for evaluating the sensor signals of the sensor device for an object of interest located in the travel lane as well as a control device (21) for providing a control signal for the tractor (8) and/or for the attachment machine (9) depending on the signal evaluation of the evaluation device.

14. Agricultural implement according to the preceding claim, wherein the control signal comprises at least one of the following signal types:
- a steering assist signal to assist steering of the tractor (8),
- a travel speed signal for influencing the travel speed of the tractor (8)
- a lift-out signal for lifting out the attachment machine (9),
- an emergency stop signal for stopping a working unit of the attachment machine (9),
- a spreading signal for spreading fertilizer or pesticide.

15. Agricultural implement according to any one of the preceding claims, wherein the evaluation device for evaluating the sensor signals of the sensor device comprises at least two of the following operating modes:
- an animal detection mode for detecting an animal located in the travel lane,
- a weed detection mode for detecting weed and/or unwanted vegetation in the travel lane,
- a fertilizer requirement mode for determining the vegetation density and/or soil conditions in the travel lane,
- a swath detection mode for determining the position and/or volume of a crop swath,
wherein the aforementioned switching means are configured to switch on the animal detection mode when a mowing machine is coupled and/or to switch on the weed detection mode when a pesticide application device is coupled and/or to switch on the fertilizer requirement mode when a fertilizer application device is coupled and/or to switch on the swath detection mode when a baler or a loader wagon is coupled.

16. Agricultural implement combination comprising an attachment machine (9) for attachment to a tractor (8), wherein the attachment machine (9) comprises a headstock with three hitching points for attachment to the tractor (8), and a implement (1) formed according to any one of claims 1 to 15 and releasably coupled to the hitching points of the headstock of the attachment machine.

17. Agricultural implement combination according to the preceding claim, wherein the attachment machine is a mowing machine, and the implement has as a functional assembly a sensor bar for sensing a travel lane to be worked by the mowing machine.

18. Agricultural combination, comprising a tractor (8), an implement (1) formed according to any one of claims 1 to 15, and an attachment machine (9) selectively attachable to the tractor (8) via the intermediate frame (10) of the implement (1) or directly to the tractor (8) without the intermediate frame (10).

19. Agricultural combination according to the preceding claim, wherein the implement (1) is attached to the rear of the tractor (8) via the intermediate frame (10) and a front unit of the attachment machine (9) is directly attached to a front lifting unit (13) of the tractor (8).

## Revendications

1. Engin agricole avec un module fonctionnel (2), en particulier sous la forme d'un bloc détecteur pour balayer par détection une allée de déplacement, et un support d'engin (3), sur lequel ledit module fonctionne (2) est disposé, dans lequel le support d'engin (3) présente des moyens de raccordement destinés à raccorder l'engin (1) à une machine rapportée (9) agricole, qui est prévue pour être montée sur un tracteur (8), dans lequel le support d'engin (3) est réalisé en tant que châssis intermédiaire (10) destiné à être intégré entre le tracteur (8) et la machine rapportée (9), lequel présente d'une part des moyens de couplage de tracteur (11) destinés à accoupler le châssis intermédiaire (10) au tracteur (8) et d'autre part des moyens de couplage de machine (16) destinés à accoupler la machine rapportée (9) au châssis intermédiaire (10), dans lequel
le module fonctionnel (2) présente au moins deux modes de fonctionnement, **caractérisé en ce que** dans les au moins deux modes de fonctionnement, la fonction du module fonctionnel (2) est adaptée aux différents modèles ou types de machine rapportée, et des moyens de commutation pour commuter de manière semi-automatique ou de manière totalement automatique entre les au moins deux modes de fonctionnement en fonction d'une machine rapportée (9) montée respectivement sur le châssis intermédiaire (10), dans lequel lesdits moyens de commutation comprennent des moyens de sélection pour sélectionner un des plusieurs modèles ou types de machine rapportée et sont réalisés pour régler, en fonction d'un modèle ou type de machine rapportée respectivement sélectionné, le mode de fonctionnement qui y est adapté, et/ou les moyens de commutation sont réalisés pour sélectionner automatiquement, en fonction d'un signal d'identification, qui identifie un modèle de machine rapportée respectivement montée ou un type de machine rapportée monté, le mode de fonctionnement qui y est adapté.

2. Engin agricole selon la revendication précédente, dans lequel les moyens de couplage de tracteur (11) du châssis intermédiaire (10) sont réalisés en complément des moyens de couplage de machine (16) du châssis intermédiaire (10) et/ou les moyens de couplage de machine (16) sont réalisés de manière à correspondre à l'articulation de l'engin rapporté du tracteur (8).

3. Engin agricole selon l'une quelconque des revendications précédentes, dans lequel les moyens de couplage de tracteur (11) et les moyens de couplage de machine (16) du châssis intermédiaire (10) sont réalisés respectivement en tant qu'articulation à trois points.

4. Engin agricole selon l'une quelconque des revendications précédentes, dans lequel les moyens de couplage de tracteur (11) du châssis intermédiaire (10) sont adaptés aux points d'articulation d'un mécanisme de levage avant (13) du tracteur (8).

5. Engin agricole selon l'une quelconque des revendications précédentes, dans lequel la forme desdits ou d'autres moyens de couplage de tracteur (11) du châssis intermédiaire (10) est adaptée à un système d'articulation côté arrière du tracteur (8).

6. Engin agricole (1) selon l'une quelconque des revendications précédentes, dans lequel les moyens de couplage de tracteur (11) du châssis intermédiaire (10) forment un premier plan (19) et les moyens de couplage de machine (16) du châssis intermédiaire (10) forment un deuxième plan (20), dans lequel lesdits premier et deuxième plans (19, 20) sont disposés au moins approximativement de manière parallèle l'un par rapport à l'autre, en particulier à la verticale.

7. Engin agricole selon l'une quelconque des revendications précédentes, dans lequel un espacement des moyens de couplage de tracteur (11) du châssis intermédiaire (10) par rapport aux moyens de couplage de machine (16) du châssis intermédiaire (10) dans la direction de déplacement est inférieur à 50 % ou est inférieur à 25 % de la différence de hauteur d'un élément de couplage de bielle supérieure (14 ; 17) par rapport à des éléments de couplage de bielle inférieure (15 ; 18) du châssis intermédiaire (10).

8. Engin agricole selon l'une quelconque des revendications précédentes, dans lequel les moyens de couplage de machine (16) du châssis intermédiaire (10) comprennent des éléments de couplage (17, 18) ajustables en position les uns par rapport aux autres.

9. Engin agricole selon la revendication précédente, dans lequel les éléments de couplage ajustables en position comprennent des éléments de couplage de bielle inférieure (18) ajustables fixés de manière ajustable sur le châssis intermédiaire (10) et/ou un élément de couplage de bielle supérieure (17) fixé de manière ajustable sur le châssis intermédiaire (10) par rapport aux éléments de couplage de bielle inférieure (18).

10. Engin agricole selon l'une quelconque des revendications précédentes, dans lequel le module fonctionnel (2) est installé de manière ajustable en hauteur, en particulier de manière à pouvoir pivoter en hauteur, sur le châssis intermédiaire (10) par un système de levage, en particulier un dispositif de pivotement de levage (4).

11. Engin agricole selon la revendication précédente, dans lequel le module fonctionnel (2) est monté de manière à pouvoir pivoter autour d'un axe de pivotement (6) horizontal, de préférence au moins approximativement parallèle à la direction de déplacement sur le châssis intermédiaire (10) et le système de pivotement de levage (4) présente un vérin (5) destiné à faire pivoter le module fonctionnel (2) depuis une position de travail abaissée dans une position de tournière et/ou de transport relevée.

12. Engin agricole selon l'une quelconque des revendications précédentes, dans lequel le module fonctionnel (2) présente un système détecteur, en particulier un bloc détecteur, pour balayer par détection une allée de déplacement.

13. Engin agricole selon la revendication précédente, dans lequel le module fonctionnel (2) présente un système d'évaluation électronique pour évaluer les signaux de détection du système détecteur sur un objet d'intérêt se trouvant sur l'allée de déplacement ainsi qu'un dispositif de commande (21) destiné à fournir un signal de commande pour le tracteur (8) et/ou pour la machine rapportée (9) en fonction de l'évaluation de signaux du système d'évaluation.

14. Engin agricole selon la revendication précédente, dans lequel le signal de commande comprend au moins un des types de signaux suivants :
- un signal d'aide à la direction pour soutenir la direction du tracteur (8),
- un signal de vitesse de déplacement pour influencer la vitesse de déplacement du tracteur (8),
- un signal de soulèvement pour soulever la machine rapportée (9),
- un signal d'arrêt d'urgence pour arrêter le groupe de travail de la machine rapportée (9),
- un signal d'épandage pour épandre des engrais ou des pesticides.

15. Engin agricole selon l'une quelconque des revendications précédentes, dans lequel le système d'évaluation destiné à évaluer les signaux de détection du système détecteur comprend au moins deux des modes de fonctionnement suivants :
- un mode d'identification d'animaux pour identifier un animal se trouvant sur l'allée de déplacement,
- un mode d'identification de mauvaises herbes pour identifier des mauvaises herbes et/ou une couverture végétale indésirable sur l'allée de déplacement,
- un mode de besoins de fertilisation pour déterminer la densité de couverture végétale et/ou la nature du sol sur l'allée de déplacement,
- un mode d'identification d'andain pour déterminer la position et/ou le volume d'un andain de produit à récolter,
dans lequel lesdits moyens de commutation sont réalisés pour activer le mode d'identification d'animaux lors de l'accouplement d'une faucheuse et/ou pour activer le mode d'identification de mauvaises herbes lors de l'accouplement d'un dispositif d'épandage de pesticide et/ou pour activer le mode de besoins en engrais lors de l'accouplement d'un dispositif d'épandage d'engrais et/ou pour activer le mode d'identification d'andains lors de l'accouplement d'une presse à balles ou d'un chariot de chargement.

16. Combinaison d'engins agricoles comprenant une machine rapportée (9) destinée à être montée sur un tracteur (8), dans laquelle la machine rapportée (9) présente un support rapporté avec trois points de montage destinés à être montés sur le tracteur (8) ainsi qu'un engin (1), qui est réalisé selon l'une quelconque des revendications 1 à 15 et est couplé de manière amovible aux points de montage du support de montage de la machine rapportée.

17. Combinaison d'engins agricoles selon la revendication précédente, dans laquelle la machine rapportée est une faucheuse et l'engin présente en tant que module fonctionnel un bloc détecteur destiné à balayer une allée de déplacement à travailler par la faucheuse.

18. Attelage agricole avec un tracteur (8), un engin (1), qui est réalisé selon l'une quelconque des revendications 1 à 15, ainsi qu'avec une machine rapportée (9), qui peut être montée au choix sur le tracteur (8) par l'intermédiaire du châssis intermédiaire (10) de l'engin (1) ou sur le tracteur (8) directement sans châssis intermédiaire (10).

19. Attelage agricole selon la revendication précédente, dans lequel l'engin (1) est monté côté arrière sur le tracteur (8) par l'intermédiaire du châssis intermédiaire (10) et un groupe avant de la machine rapportée (9) est monté directement sur un mécanisme de levage avant (13) du tracteur (8).
